# EUROPEAN PATENT SPECIFICATION

(11) **EP 2 769 333 B1**
(45) Date of publication and mention of the grant of the patent: **01.06.2016**
(21) Application number: 12778831.3
(22) Date of filing: 12.09.2012
(51) Int. Cl.: G06K 9/00

(54) **VIDEO BASED PEDESTRIAN TRAFFIC ESTIMATION**
VIDEOBASIERTE FUSSGÄNGERVERKEHRSSCHÄTZUNG
ESTIMATION DE TRAFIC PIÉTON SUR LA BASE DE VIDÉO

(30) Priority: 21.10.2011 US 201161550320 P; 09.12.2011 US 201113316363
(43) Date of publication of application: 27.08.2014
(73) Proprietor: Qualcomm Incorporated, San Diego, CA 92121 (US)
(72) Inventor: CHAO, Hui, San Diego, California 92121-1714 (US); GUPTA, Rajarshi, San Diego, California 92121 (US)
(74) Representative: Schmidbauer, Andreas Konrad
(86) International application number: PCT/US2012/054913
(87) International publication number: WO 2013/058895

(56) References cited:
- WO-A2-2007/033286
- US-A1- 2003 040 815
- US-A1- 2008 130 951
- US-A1- 2009 189 984
- BRANDLE N ET AL: "Realistic Interactive Pedestrian Simulation and Visualization for Virtual 3D Environments", VIRTUAL SYSTEMS AND MULTIMEDIA, 2009. VSMM '09. 15TH INTERNATIONAL CONFERENCE ON, IEEE, PISCATAWAY, NJ, USA, 9 September 2009 (2009-09-09), pages 179-184, XP031557690, ISBN: 978-0-7695-3790-0
- KELLY P ET AL: "Robust pedestrian detection and tracking in crowded scenes", IMAGE AND VISION COMPUTING, ELSEVIER, GUILDFORD, GB, vol. 27, no. 10, 2 September 2009 (2009-09-02), pages 1445-1458, XP026171151, ISSN: 0262-8856, DOI: 10.1016/J.IMAVIS.2008.04.006 [retrieved on 2008-04-22]
- TOYOSAWA S ET AL: "Crowdedness estimation in public pedestrian space for pedestrian guidance", INTELLIGENT TRANSPORTATION SYSTEMS, 2005. PROCEEDINGS. 2005 IEEE VIENNA, AUSTRIA 13-16 SEPT. 2005, PISCATAWAY, NJ, USA,IEEE, 13 September 2005 (2005-09-13), pages 137-142, XP010843012, DOI: 10.1109/ITSC.2005.1520036 ISBN: 978-0-7803-9215-1
- TARIK CRNOVRSANIN ET AL: "Proximity-based visualization of movement trace data", VISUAL ANALYTICS SCIENCE AND TECHNOLOGY, 2009. VAST 2009. IEEE SYMPOSIUM ON, IEEE, PISCATAWAY, NJ, USA, 12 October 2009 (2009-10-12), pages 11-18, XP031565347, ISBN: 978-1-4244-5283-5
- XIAOWEI SHAO ET AL: "Tracking a variable number of pedestrians in crowded scenes by using laser range scanners", SYSTEMS, MAN AND CYBERNETICS, 2008. SMC 2008. IEEE INTERNATIONAL CONFERENCE ON, IEEE, PISCATAWAY, NJ, USA, 12 October 2008 (2008-10-12), pages 1545-1551, XP031447298, DOI: 10.1109/ICSMC.2008.4811506 ISBN: 978-1-4244-2383-5

## Description

### TECHNICAL FIELD

The present description is related, generally, to position location and, more particularly to, indoor location determination and traffic estimation.

### BACKGROUND

Mobile communications networks are offering increasingly sophisticated capabilities associated with the motion and/or position location sensing of a mobile device. New software applications, such as for example, those related to personal productivity, collaborative communications, social networking, and/or data acquisition, may utilize motion and/or position sensors to provide new features and services to consumers.

In conventional digital cellular networks, position location capability can be provided by various time and/or phase measurement techniques. For example, in CDMA networks, one position determination approach is Advanced Forward Link Trilateration (AFLT). Using AFLT, a mobile device may compute its position from phase measurements of pilot signals transmitted from multiple base stations. Improvements to AFLT have been realized by utilizing hybrid position location techniques, where the mobile device may employ a Satellite Positioning System (SPS) receiver. The SPS receiver may provide position information independent of the information derived from the signals transmitted by the base stations. Moreover, position accuracy can be improved by combining measurements derived from both SPS and AFLT systems using conventional techniques.

However, conventional position location techniques based upon signals provided by SPS and/or cellular base stations may encounter difficulties when the mobile device is operating within a building and/or within urban environments. In the case of indoor location, where SPS is often ineffective and inaccurate, various wireless technologies can be used for indoor location by making use of various types of measurement of the signal, such as Time Of Flight (TOF), angle, and signal strength, and the physical layer infrastructure such as the wireless network used to communicate with the static devices and/or mobile devices. In general, an indoor wireless positioning system includes signal transmitter(s) and a measuring unit on the mobile device. With known locations of the signal transmitter(s) and the signal strength from each transmitter, the location of the mobile device may be computed.

A known method of video based pedestrian traffic estimation is disclosed in BRANDLE N ET AL: "Realistic Interactive Pedestrian Simulation and Visualization for Virtual 3D Environments", VIRTUAL SYSTEMS AND MULTIMEDIA, 2009. VSMM '09. 15TH INTERNATIONAL CONFERENCE ON, IEEE, PISCATAWAY, NJ, USA, 9 September 2009, pages 179-184.

Indoor positioning techniques may be improved with more robust indoor traffic planning and route estimation.

### SUMMARY

A method for video based pedestrian traffic estimation is defined according to the terms of claim 1. The method includes detecting persons from a video input. The method also includes determining pedestrian traffic at a location from the detected persons. The method further includes tracking pedestrian traffic at the location over time. The method still further includes predicting pedestrian traffic at the location at a future time, based at least in part on the tracked pedestrian traffic.

An apparatus for video based pedestrian traffic estimation is defined according to the terms of claim 9. The apparatus includes means for detecting persons from a video input. The apparatus also includes means for determining pedestrian traffic at a location from the detected persons. The apparatus further includes means for tracking pedestrian traffic at the location over time. The apparatus still further includes means for predicting pedestrian traffic at the location at a future time, based at least in part on the tracked pedestrian traffic.

A computer program product for video based pedestrian traffic estimation is defined according to the terms of claim 11. The computer program product includes a non-transitory computer-readable medium having non-transitory program code recorded thereon. The program code includes program code to detect persons from a video input. The program code also includes program code to determine pedestrian traffic at a location from the detected persons. The program code further includes program code to track pedestrian traffic at the location over time. The program code still further includes program code to predict pedestrian traffic at the location at a future time, based at least in part on the tracked pedestrian traffic.

The scope of the invention is determined by the terms of the claims.

### BRIEF DESCRIPTION OF THE DRAWINGS

The features, nature, and advantages of the present disclosure will become more apparent from the detailed description set forth below when taken in conjunction with the drawings in which like reference characters identify correspondingly throughout.
FIG. 1 is a diagram of an exemplary operating environment for a mobile device consistent with aspects of the present disclosure.
FIG. 2A is a block diagram illustrating various components of an exemplary mobile device according to one aspect of the present disclosure.
FIG. 2B is a block diagram illustrating various components of a server according to one aspect of the present disclosure.
FIG. 3 shows a block diagram illustrating a system for indoor traffic estimation and route planning according to one aspect of the present disclosure.
FIG. 4A shows a sample annotation layer for indoor traffic estimation and route planning according to one aspect of the present disclosure.
FIG. 4B shows a sample routing graph for indoor traffic estimation and route planning according to one aspect of the present disclosure.
FIG. 4C shows a sample installation of cameras for indoor traffic estimation and route planning according to one aspect of the present disclosure.
FIG. 5 shows a sample installation of cameras for indoor traffic estimation and route planning according to one aspect of the present disclosure.
FIG. 6 shows a flow diagram illustrating a system for indoor traffic estimation and route planning according to one aspect of the present disclosure.
FIG. 7 is a block diagram illustrating components for indoor traffic estimation and route planning according to one aspect of the present disclosure.

### DETAILED DESCRIPTION

Aspects of the disclosure in the following description and related drawings are directed to specific configurations. Alternate configurations may be devised without departing from the scope of the present disclosure. Additionally, well-known elements will not be described in detail or will be omitted so as not to obscure the relevant details of the disclosure. Various aspects of the disclosure provide techniques for indoor traffic estimation and route planning.

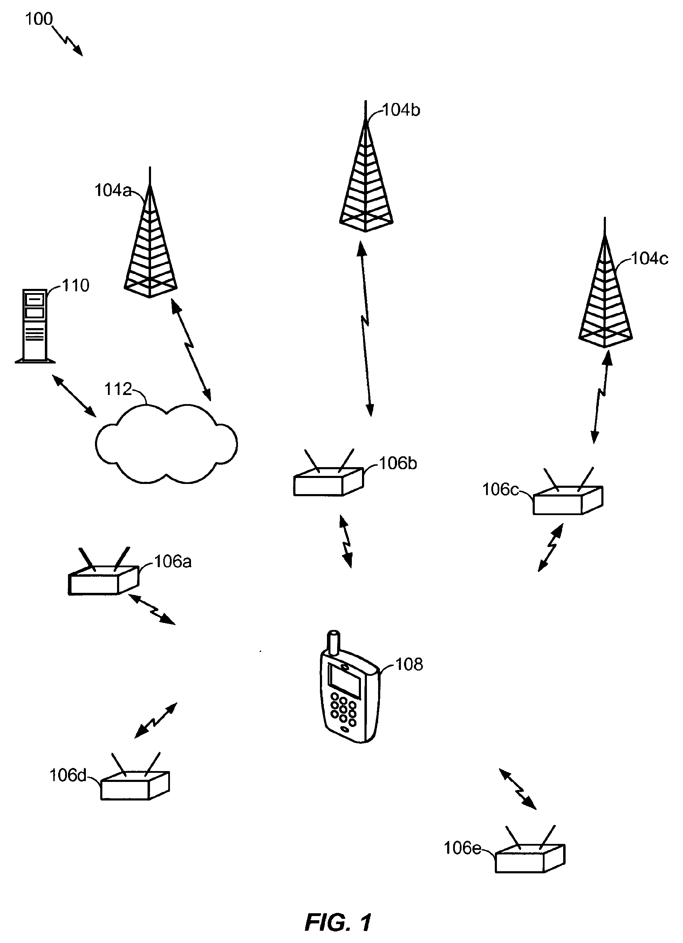

FIG. 1 is a diagram of an exemplary operating environment 100 for a mobile device 108. Certain aspects of the disclosure are directed to a mobile device 108 which may utilize a combination of techniques for determining position. Other aspects may adaptively change the ranging models, such as, for example, using round trip time measurements (RTTs) that are adjusted to accommodate for processing delays introduced by wireless access points. The processing delays may vary among different access points and may also change over time. By using supplemental information, such as, for example, a received signal strength indicator (RSSI), the base station may determine position and/or calibrate out the effects of the processing delays introduced by the wireless access points using iterative techniques.

The operating environment 100 may contain one or more different types of wireless communication systems and/or wireless positioning systems. Although a sample indoor location system is illustrated, other indoor location systems may be used and may be combined with one or more traditional Satellite Positioning Systems (SPS) or other outdoor location systems (not shown).

The operating environment 100 may include any combination of one or more types Wide Area Network Wireless Access Points (WAN-WAPs) 104, which may be used for wireless voice and/or data communication, and as another source of independent position information for mobile device 108. The WAN-WAPs 104 may be part of a wide area wireless network (WWAN), which may include cellular base stations at known locations, and/or other wide area wireless systems, such as, for example, WiMAX (e.g., 802.16). The WWAN may include other known network components not shown in Fig. 1 for simplicity. Typically, each WAN-WAPs 104a-104c within the WWAN may operate from fixed positions, and provide network coverage over large metropolitan and/or regional areas.

The operating environment 100 may further include Local Area Network Wireless Access Points (LAN-WAPs) 106, used for wireless voice and/or data communication, as well as another independent source of position data. The LAN-WAPs can be part of a Wireless Local Area Network (WLAN), which may operate in buildings and perform communications over smaller geographic regions than a WWAN. Such LAN-WAPs 106 may be part of, for example, WiFi networks (802.11 x), cellular piconets and/or femtocells, Bluetooth networks, etc.

The mobile device 108 may derive position information from any one or a combination of SPS satellites (not shown), the WAN-WAPs 104, and/or the LAN-WAPs 106. Each of the aforementioned systems can provide an independent estimate of the position for the mobile device 108 using different techniques. In some aspects, the mobile device may combine the solutions derived from each of the different types of access points to improve the accuracy of the position data.

Aspects of the present disclosure may be used with positioning determination systems that utilize pseudolites or a combination of satellites and pseudolites. Pseudolites are ground-based transmitters that broadcast a pseudorandom noise (PN) code or other ranging code (similar to a global positioning system (GPS) or code-division multiple access (CDMA) cellular signal) modulated on an L-band (or other frequency) carrier signal, which may be synchronized with GPS time. Each such transmitter may be assigned a unique PN code so as to permit identification by a remote receiver. Pseudolites are useful in situations where GPS signals from an orbiting satellite might be unavailable, such as in tunnels, mines, buildings, urban canyons or other enclosed areas. Another implementation of pseudolites is known as radio-beacons. The term "satellite", as used herein, is intended to include pseudolites, equivalents of pseudolites, and possibly other positioning devices.

When deriving position from the WWAN, each WAN-WAP 104a-104c may take the form of base stations within a digital cellular network, and the mobile device 108 may include a cellular transceiver and processor that can exploit the base station signals to derive position. It should be understood that digital cellular network may include additional base stations or other resources show in Fig. 1. While WAN-WAPs 104 may actually be moveable or otherwise capable of being relocated, for illustration purposes it will be assumed that they are essentially arranged in a fixed position.

The mobile device 108 may perform position determination using known time-of-arrival techniques such as, for example, Advanced Forward Link Trilateration (AFLT). In other aspects, each WAN-WAP 104a-104c may take the form of WiMax wireless networking base station. In this case, the mobile device 108 may determine its position using time-of-arrival (TOA) techniques from signals provided by the WAN-WAPs 104. The mobile device 108 may determine positions either in a stand alone mode, or using the assistance of a positioning server 110 and network 112 using TOA techniques, as will be described in more detail below. Note that aspects of the disclosure include having the mobile device 108 determine position information using WAN-WAPs 104 which are different types. For example, some WAN-WAPs 104 may be cellular base stations, and other WAN-WAPs may be WiMax base stations. In such an operating environment, the mobile device 108 may be able to exploit the signals from each different type of WAN-WAP, and further combine the derived position solutions to improve accuracy.

When deriving position using the WLAN, the mobile device 108 may utilize time of arrival techniques with the assistance of the positioning server 110 and the network 112. The positioning server 110 may communicate to the mobile device through network 112. Network 112 may include a combination of wired and wireless networks which incorporate the LAN-WAPs 106. In one aspect, each LAN-WAP 106a-106e may be, for example, a WiFi wireless access point, which is not necessarily set in a fixed position and can change location. The position of each LAN-WAP 106a-106e may be stored in the positioning server 110 in a common coordinate system. In one aspect, the position of the mobile device 108 may be determined by having the mobile device 108 receive signals from each LAN-WAP 106a-106e. Each signal may be associated with its originating LAN-WAP based upon some form of identifying information that may be included in the received signal (such as, for example, a MAC address). The mobile device 108 may then derive the time delays associated with each of the received signals. The mobile device 108 may then form a message which can include the time delays and the identifying information of each of the LAN-WAPs, and send the message via network 112 to the positioning server 110. Based upon the received message, the positioning server may then determine a position, using the stored locations of the relevant LAN-WAPs 106 of the mobile device 108. The positioning server 110 may generate and provide a Location Configuration Information (LCI) message to the base station that includes a pointer to the mobile device's position in a local coordinate system. The LCI message may also include other points of interest in relation to the location of the mobile device 108. When computing the position of the mobile device 108, the positioning server may take into account the different delays which can be introduced by elements within the wireless network.

The position determination techniques described herein may be used for various wireless communication networks such as a wide area wireless network (WWAN), a wireless local area network (WLAN), a wireless personal area network (WPAN), and so on. The term "network" and "system" may be used interchangeably. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, a WiMax (IEEE 802.16) and so on. A CDMA network may implement one or more radio access technologies (RATs) such as cdma2000, Wideband-CDMA (W-CDMA), and so on. Cdma2000 includes IS-95, IS-2000, and IS-856 standards. A TDMA network may implement Global System for Mobile Communications (GSM), Digital Advanced Mobile Phone System (D-AMPS), or some other RAT. GSM and W-CDMA are described in documents from a consortium named "3rd Generation Partnership Project" (3GPP). Cdma2000 is described in documents from a consortium named "3rd Generation Partnership Project 2" (3GPP2). 3GPP and 3GPP2 documents are publicly available. A WLAN may be an IEEE 802.11x network, and a WPAN may be a Bluetooth network, an IEEE 802.15x, or some other type of network. The techniques may also be used for any combination of WWAN, WLAN and/or WPAN.

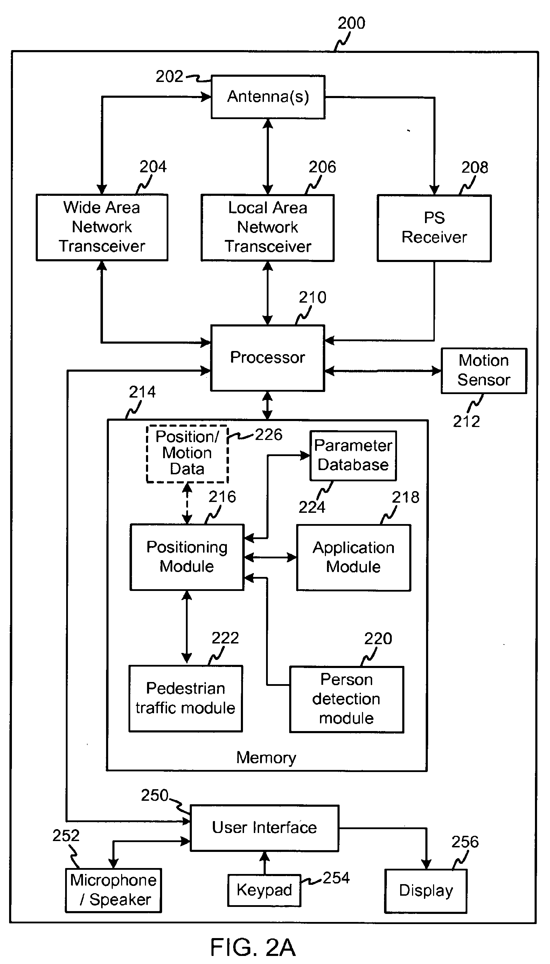

FIG. 2A is a block diagram illustrating various components of an exemplary mobile device 200. For the sake of simplicity, the various features and functions illustrated in the box diagram of FIG. 2A are connected together using a common bus which is meant to represent that these various features and functions are operatively coupled together. Those skilled in the art will recognize that other connections, mechanisms, features, functions, or the like, may be provided and adapted as necessary to operatively couple and configure an actual portable wireless device. Further, it is also recognized that one or more of the features or functions illustrated in the example of FIG. 2A may be further subdivided or two or more of the features or functions illustrated in FIG. 2A may be combined.

The mobile device 200 may include one or more wide area network transceiver(s) 204 that may be connected to one or more antennas 202. The wide area network transceiver 204 comprises suitable devices, hardware, and/or software for communicating with and/or detecting signals to/from WAN-WAPs 104, and/or directly with other devices within a network. In one aspect, the wide area network transceiver 204 may comprise a CDMA communication system suitable for communicating with a CDMA network of wireless base stations; however in other aspects, the wireless communication system may comprise another type of cellular telephony network, such as, for example, TDMA or GSM. The mobile device 200 may also include one or more local area network transceivers 206 that may be connected to one or more antennas 202. The local area network transceiver 206 comprises suitable devices, hardware, and/or software for communicating with and/or detecting signals to/from LAN-WAPs 106, and/or directly with other wireless devices within a network. In one aspect, the local area network transceiver 206 may comprise a WiFi (802.11 x) communication system suitable for communicating with one or more wireless access points; however in other aspects, the local area network transceiver 206 comprise another type of local area network, personal area network, (e.g., Bluetooth). The transceivers may also include one or more wireless signal measuring unit(s). The wireless signal measuring unit(s) may be included as part of a wireless transceiver or may be included as a separate component of the mobile device 200. Some aspects may have multiple transceivers and wireless antennas to support communications with base stations and/or other transceivers operating any other type of wireless networking technologies such as wireless local area network (WLAN), code division multiple access (CDMA), wideband CDMA (WCDMA), Long Term Evolution (LTE), Bluetooth, WiMax (802.16), Ultra Wide Band, ZigBee, wireless USB, etc.

As used herein, the abbreviated term "wireless access point" (WAP) may be used to refer to LAN-WAPs 106 and/or WAN-WAPs 104. Specifically, in the description presented below, when the term "WAP" is used, it should be understood that aspects may include a mobile device 200 that can exploit signals from multiple LAN-WAPs 106, multiple WAN-WAPs 104, or any combination of the two. The specific type of WAP being utilized by the mobile device 200 may depend upon the environment of operation. Moreover, the mobile device 200 may dynamically select between the various types of WAPs in order to arrive at an accurate position solution.

A Positioning System (PS) receiver 208 may also be included in mobile device 200. The PS receiver 208 may be connected to the one or more antennas 202 for receiving positioning system signals. The PS receiver 208 may comprise any suitable hardware and/or software for receiving and processing PS signals. The PS receiver 208 requests information and operations as appropriate from the other systems, and may perform calculations to determine the device's 200 position using measurements obtained by any suitable positioning system algorithm. The PS receiver 208 may also receive direct location information without having to perform additional measurements. A PS transmitter (not-shown) may also be included to transmit location information to other devices.

A motion sensor 212 may be coupled to processor 210 to provide relative movement and/or orientation information which is independent of motion data derived from signals received by the wide area network transceiver 204, the local area network transceiver 206 and the PS receiver 208. By way of example but not limitation, motion sensor 212 may utilize an accelerometer (e.g., a MEMS device), a gyroscope, a geomagnetic sensor (e.g., a compass), an altimeter (e.g., a barometric pressure altimeter), and/or any other type of movement detection sensor. Moreover, motion sensor 212 may include different types of devices and combine their outputs in order to provide motion information.

A processor 210 may be connected to the wide area network transceiver 204, local area network transceiver 206, the PS receiver 208 and the motion sensor 212. The processor may include one or more microprocessors, microcontrollers, and/or digital signal processors that provide processing functions, as well as other calculation and control functionality. The processor 210 may also include memory 214 for storing data and software instructions for executing programmed functionality within the mobile device. The memory 214 may be on-board the processor 210 (e.g., within the same integrated circuit package), and/or the memory may be external memory to the processor and functionally coupled over a data bus. The details of software functionality associated with aspects of the disclosure will be discussed in more detail below.

A number of software modules and data tables may reside in memory 214 and be utilized by the processor 210 in order to manage both communications and positioning determination functionality. As illustrated in FIG. 2A, memory 214 may include and/or otherwise receive a positioning module 216, an application module 218, a person detection module 220, and a pedestrian traffic module 222. The person detection module may detect persons at a location or receive information from another system (such as the positioning server 110) regarding persons detected in a location. The pedestrian traffic module 222 may determine pedestrian traffic at a location as well determine estimates for pedestrian traffic at a location at a specific point in time. The pedestrian traffic module 222 may also receive information from another system (such as positioning server 110) regarding pedestrian traffic at a location and/or estimates for pedestrian traffic at a location at a specific point in time. Other modules for position location may also be included. One should appreciate that the organization of the memory contents as shown in FIG. 2A is merely exemplary, and as such the functionality of the modules and/or data structures may be combined, separated, and/or be structured in different ways depending upon the implementation of the mobile device 200.

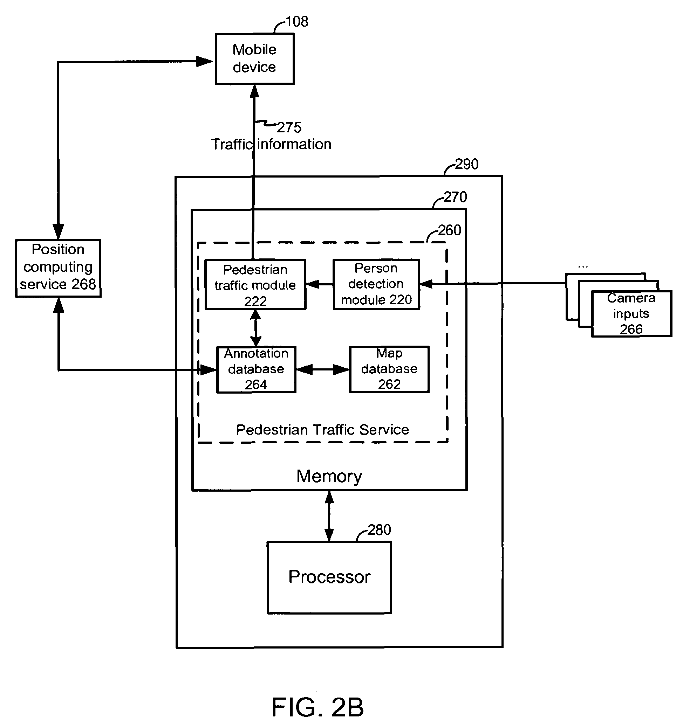

As shown in FIG. 2B, certain components disclosed in FIG. 2A may be incorporated into a back-end system such as a server 290. Specifically, a server 290 may include the person detection module 220 and pedestrian traffic module 222 to perform the person detection and traffic estimation as described below. Further, the server 290 (or other back-end system) may perform route guidance as described below. If person detection, pedestrian traffic information 270, and/or route guidance is performed by the server 290 or other back-end system, the resulting information may be sent to the mobile device and received by the antenna(s) 202 and operated on by the processor 210.

FIG. 2B illustrates a server 290 or other back-end system for traffic determination and estimation. The server 290 includes a memory 270 for storing instructions for pedestrian traffic determination and a processor 280 for executing those instructions. A pedestrian traffic service 260 and various other modules may reside in the memory 270. Although illustrated as existing in memory, the pedestrian traffic service 260 may comprise a combination of hardware, software, and/or firmware modules. The pedestrian traffic service 260 monitors and manages data regarding pedestrian traffic. In one aspect the person detection module 220 and pedestrian traffic module 222 may be incorporated into the pedestrian traffic service 260. In another aspect the pedestrian traffic service 260 may be in communication with the person detection module 220 and pedestrian traffic module 222. The pedestrian traffic service 260 may also include and/or be in communication with a map database 262, which contains information regarding maps of indoor locations, and an annotation database 264, which contains information regarding annotation layers of the indoor locations, as explained below.

The pedestrian traffic service 260, through the annotation database 264 or otherwise, may communicate with a position computing service 268 which may provide location information to a mobile device 108. Location information may assist the pedestrian traffic service 260 in providing appropriate traffic information 275 to the mobile device 108. The position computing service 268 may be performed by a positioning server 110 and/or may reside along with the map database 262 and annotation database 264. Alternatively, the position computing service 268 may be performed directly on a mobile device 108 with map information loaded from a local or server database. The position computing service 268 may also reside on the same device/server as the pedestrian traffic service 260.

The pedestrian traffic service 260, through the person detection module 220 or otherwise, may communicate with camera inputs 266 or other indoor location information input devices to receive information for person detection. That person detection information may be used by the pedestrian traffic module 222 or other modules to determine and/or estimate traffic at an indoor location as described below. The indoor traffic estimation may be performed by the annotation database 264 to determine indoor annotation layers. The indoor traffic estimation may also be provided to a mobile device 108.

The pedestrian traffic service 260, through the pedestrian traffic module 222 or otherwise, may communicate with a mobile device 108 to send pedestrian traffic information 275 to the mobile device 108. The pedestrian traffic information 275 may include information regarding pedestrian traffic at a location (including amount of traffic, direction of traffic, flow of traffic, etc.), pedestrian traffic at a location over time, estimated pedestrian traffic at a location, and/or route guidance information (including an estimated delay along a route, a preferred time to travel along a route, alternate times to travel along a route, alternate route selection, etc.). The pedestrian traffic information 275 may be sent to the mobile device 108 in a number of ways. The pedestrian traffic information 275 may be sent as a colored heat map of a venue or regions around the current position of the mobile device 108 or user. The pedestrian traffic information 275 may be sent as a colored routability map of a current venue with different colors indicating different traffic conditions. The pedestrian traffic information 275 may also be sent as a navigation route, which may be colored or otherwise marked to indicate different traffic conditions.

Returning to FIG. 2A, the application module 218 may be a process running on the processor 210 of the mobile device 200, which requests position information from the positioning module 216. Applications typically run within an upper layer of the software architectures, and may include Indoor Navigation, Route Guidance, Buddy Locator, Shopping and Coupons, Asset Tracking, and location Aware Service Discovery. The positioning module 216 may derive the position of the mobile device 200 using information derived from processor using location information sent by the positioning server 110 and/or calculated by mobile device resources such as the motion sensor 212.

In other aspects, supplemental position information may be used to determine the indoor position of a mobile device. Such supplemental information may optionally include auxiliary position and/or motion data which may be determined from other sources. The auxiliary position data may be incomplete or noisy, but may be useful as another source of independent information for estimating the processing times of the WAPs. As illustrated in FIG. 2A using dashed lines, the mobile device 200 may optionally store auxiliary position/motion data 226 in memory which may be derived from information received from other sources such as the positioning server 110. Moreover, in other aspects, supplemental information may include, but not be limited to, information that can be derived or based upon Bluetooth signals, beacons, RFID tags, and/or information derived from map (e.g., receiving coordinates from a digital representation of a geographical map by, for example, a user interacting with a digital map).

In one aspect, all or part of auxiliary position/motion data 226 may be derived from information supplied by motion sensor 212 and/or PS receiver 208. In other aspects, auxiliary position/motion data 226 may be determined through additional networks using various techniques. In certain implementations, all or part of auxiliary position/motion data 226 may also be provided by way of motion sensor 212 and/or PS receiver 208 without further processing by processor 210. In some aspects, the auxiliary position/motion data 226 may be directly provided by the motion sensor 212 and/or PS receiver 208 to the processing unit 210. Position/motion data 226 may also include acceleration data and/or velocity data which may provide direction and speed. In other aspects, position/motion data 226 may further include directionality data which may only provide direction of movement.

While the modules shown in FIG. 2A are illustrated in the example as being contained in memory 214, it is recognized that in certain implementations such procedures may be provided for or otherwise operatively arranged using other or additional mechanisms. For example, all or part of positioning module 216 and/or application module 218 may be provided in firmware. Additionally, while in this example positioning module 216 and application module 218 are illustrated as being separate features, it is recognized, for example, that such procedures may be combined together as one procedure or perhaps with other procedures, or otherwise further divided into sub-procedures.

The processor 210 may include any form of logic suitable for performing at least the techniques provided herein. For example, the processor 210 may be operatively configurable based on instructions in memory 214 to selectively initiate one or more routines that exploit motion data for use in other portions of the mobile device.

The mobile device 200 may include a user interface 250 which provides any suitable interface systems, such as a microphone/speaker 252, keypad 254, and display 256 that allows user interaction with the mobile device 200. The microphone/speaker 252 provides for voice communication services using the wide area network transceiver 204 and/or the local area network transceiver 206. The keypad 254 comprises any suitable buttons for user input. The display 256 comprises any suitable display, such as, for example, a backlit LCD display, and may further include a touch screen display for additional user input modes.

As used herein, the mobile device 108 may be any portable or movable device or machine that is configurable to acquire wireless signals transmitted from, and transmit wireless signals to, one or more wireless communication devices or networks. The mobile device is representative of such a portable wireless device. Thus, by way of example but not limitation, the mobile device 108 may include a radio device, a cellular telephone device, a computing device, a personal communication system (PCS) device, or other like movable wireless communication equipped device, appliance, or machine. The term "mobile device" is also intended to include devices which communicate with a personal navigation device (PND), such as by short-range wireless, infrared, wire line connection, or other connection - regardless of whether satellite signal reception, assistance data reception, and/or position-related processing occurs at the device or at the PND. Also, "mobile device" is intended to include all devices, including wireless communication devices, computers, laptops, etc. which are capable of communication with a server, such as via the Internet, WiFi, or other network, and regardless of whether satellite signal reception, assistance data reception, and/or position-related processing occurs at the device, at a server, or at another device associated with the network. Any operable combination of the above are also considered a "mobile device."

As used herein, the term "wireless device" may refer to any type of wireless communication device which may transfer information over a network and also have position determination and/or navigation functionality. The wireless device may be any cellular mobile terminal, personal communication system (PCS) device, personal navigation device, laptop, personal digital assistant, or any other suitable mobile device capable of receiving and processing network and/or PS signals.

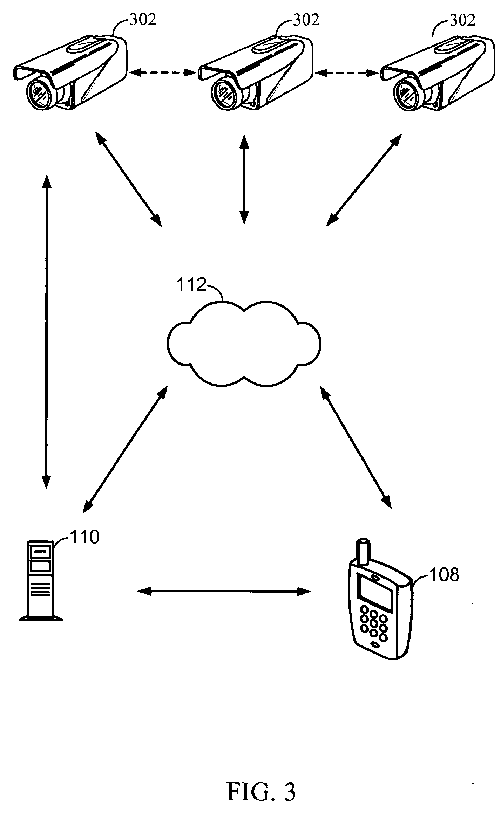

As shown in FIG. 3, according to one aspect of the present disclosure, a positioning server 110 communicates indoor location information to the mobile device 108. Such communications may either be directly or through a network 112. The positioning server 110 may be in communication (either directly or through a network 112) with a number of indoor location information input devices 302, which may be video cameras or similar audio/visual input devices.

Similar to with GPS navigation, for an indoor navigation system, from point A to B, there may be multiple route choices. Knowledge of a traffic situation on those routes may assist the user to choose a better path based on user preferences. For an indoor environment, the traffic is usually the amount of pedestrians on certain routes or locations.

For indoor venues, there may be security cameras installed in certain locations. A traffic situation may be learned based on captured video signals from those security cameras. For example, using person detection and person tracking techniques, the amount of pedestrian traffic at certain locations may be determined/estimated for a future time. A traffic map can then be derived based on the number of individuals at each location.

Person detection may be performed through face detection or through any other suitable technique. Such detection techniques may include determining whether a video image includes features associated with an individual's face. Background portions of an image may be removed to isolate foreground portions which are processed to determine if facial features are detected. Skin color detection techniques may be used. Motion determination techniques may also be used. Differential image techniques (to compare one image with a previous image) may determine whether identified features indicate presence of a person (i.e., blinking) or the movement of a person (i.e., from one location in a captured image to another). Various face models may be employed to improve the person/face detection techniques. Such face models may be compared with captured images to determine whether a face is located in the image. Various combinations of the above and other techniques may also be employed to detect persons/faces in a video image.

Face/person detection and tracking techniques may estimate pedestrian traffic in locations equipped with cameras or other indoor location information input devices. The proliferation of video and camera installations in many locations both indoors and outdoors, combined with updated techniques for facial and person recognition using video data, allows for the capture of data regarding traffic patterns, and in particular pedestrian traffic characteristics and patterns (such as volume, direction, etc.). Further, tracking techniques based on recognition data may be employed for purposes of analysis and eventual use in future traffic estimation, route guidance, and other location based activity.

A traffic map may be derived based on the number of people at or expected to be at certain locations. Such traffic estimation may be provided to users for route planning/congestion information. Face/person detection and tracking techniques may be used for translating images from camera locations into information about pedestrian traffic at particular times in particular locations.

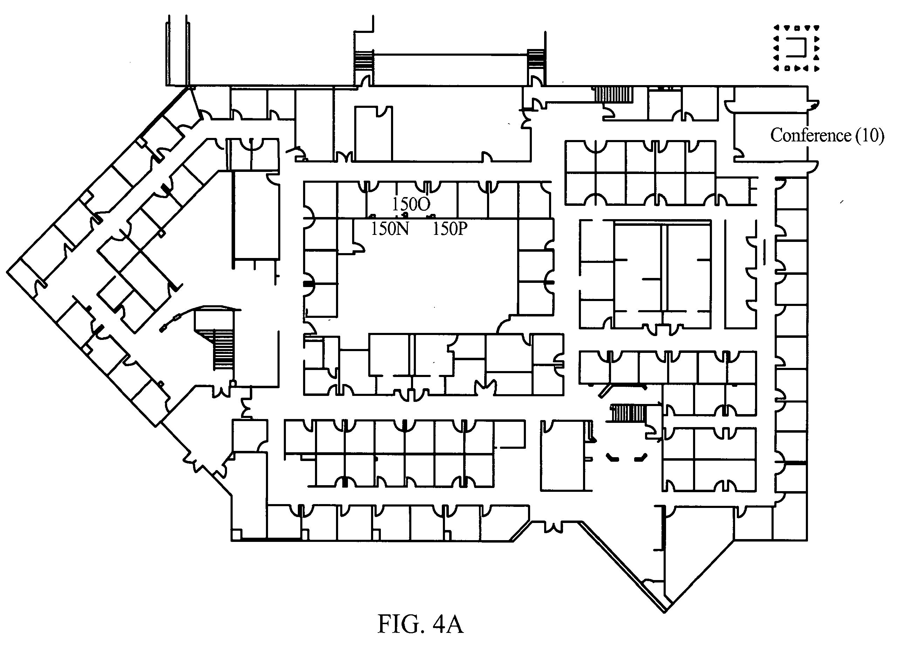

For a map of an indoor location, camera locations may be stored as part of annotation layers, for example as part of a camera object. An annotation layer for a venue may contain various information which may assist navigation and location searching within the venue. This information may include a routability graph or path of a venue, points of interest (POIs) (such as room number, store names, etc.), and the connectivity between different points. For example, FIG. 4A shows a sample annotation layer showing an indoor location (a floor of an office layout) listing certain points of interest on the floor indicated by a label such as room number "150N", "150O", or "150P", or description, e.g. "Conference (10)." (For ease of illustration, only certain labels are shown. A complete annotation layer in the format of FIG. 4A with labels for each point at an indoor location may be difficult to read if fully shown.)

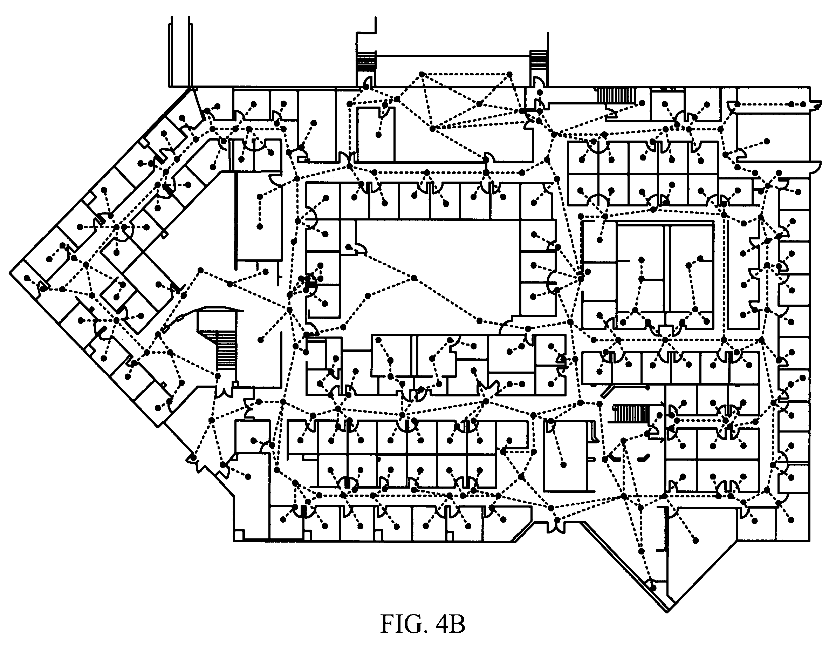

A routability graph may be represented by nodes and segments. Each node may be classified and annotated as a room, hallway, L intersection, T intersection, cross junction, etc. FIG. 4B shows another annotation layer in the form of a routing graph of the office floor. As illustrated, the indoor location has multiple potential destinations and direction change points (indicated by the dots) and multiple potential route segments between the destinations and chance points (the routes indicated by the dashed lines connecting the dots). New annotation layers and routability graphs may be determined based on a change in conditions to the indoor location (such as internal construction, temporary rerouting of an indoor route, janitorial activity, etc.).

A camera object may be associated with a camera in a physical location. On one hand, based on the camera's location, each camera object has one or more route segments in the routability graph. On the other hand, each route segment or node may be associated with multiple camera objects. For example, two camera facing different directions may be installed at a turn. Each of those cameras may be associated with the node of the intersection and with multiple route segments intersecting the node (though each individual camera may be associated with different route segments depending on the direction the camera is facing). A route segment may also have one or more camera objects in its annotation layer.

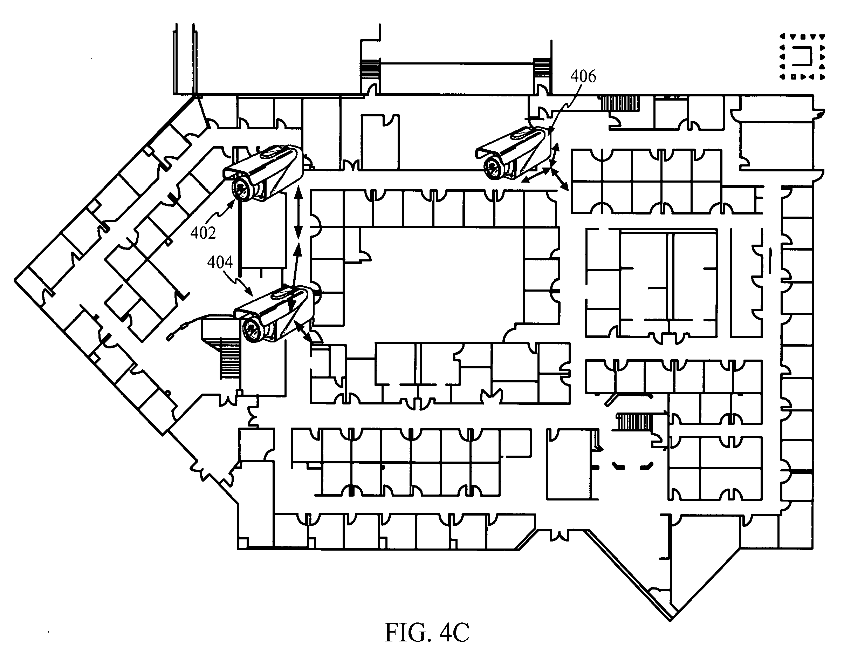

FIG. 4C shows a sample placement of cameras in an indoor location for route planning purposes. Cameras 402, 404, and 406 are positioned at intersections to view pedestrian traffic. The camera 402 records pedestrian traffic information for three directions (i.e., three route segments), indicated by the three arrows associated with the camera 402. The camera 404 records pedestrian traffic information in two directions (i.e., two route segments), indicated by the two arrows associated with the camera 404. The camera 406 records pedestrian traffic information in three directions (i.e. three route segments), indicated by the three arrows associated with the camera 406. Information captured by these cameras may be processed (such as with face recognition technology) to obtain pedestrian traffic data for use as described in the present disclosure.

Each camera object may be associated with a variety of metadata including location coordinates (e.g., x, y, and/or z position), route segment(s), location type (e.g., intersection, stairs, etc.), traffic object, etc. Types of traffic objects include time (start, end, duration), total number of faces detected, distribution of pedestrian traffic on each route, direction of traffic, or other information.

Traffic situations may be computed based on the total number of people in traffic objects and can be categorized as heavy, normal, or light based on a threshold set manually or by comparing to historical traffic data. Each camera may acquire images and videos for computation of the data for each traffic object. Images and/or short videos may be captured periodically. Face/person detection is performed on the image or video. Pedestrian tracking can also be performed based on video. The number of people detected over a certain amount of time may be obtained.

With the above information collected, a statistical traffic sample of the route may be calculated. For example, along a particular route the sample may look like:
125 people/hr between 9 a.m. and 5 p.m.
15 people/hr between 7 a.m. and 9 a.m., and 5 p.m. and 7 p.m.
approximately 0 people/hr between 7 p.m. and 7 a.m.

Traffic objects on a map may be continuously updated, which would allow a better computation of routes using temporal information. Improved or optimal routes may be calculated based on existing traffic and/or expected traffic. For example, a shortcut through a cafeteria may be undesired during lunch hour, but preferred at 3 p.m.

For a camera on an intersection, the route a person takes may be estimated based on the trajectory of the person's motion on the video. In this scenario, trajectory means the person's likely direction from the specific intersection (i.e. left, right, straight, etc.) Over time, a statistical model of the traffic distribution at that intersection may be built. For example, for a particular intersection at a particular time, 20% of people go left, 10% go right, and 70% go straight. In another aspect, the speed/flow of the traffic may be observed. Based on the traffic observations, a weighting function can be assigned to a route segment associated with a camera providing traffic information.

A statistical model may provide an a priori probability distribution for which direction people are likely to take, when they arrive at the distribution. This information may be useful for predicting motion while estimating position, for example, as input to a particle filter, and for computing likely routes between two points with multiple route choices. A particle filter is a probabilistic approximation algorithm based on a Sequential Monte Carlo statistical simulation. Each sensor input information causes the samples to be updated based on weights obtained from a likelihood model for current measurement. Such prediction calculations may assist in recommending routes for users to avoid estimated congestions points or otherwise plan specific routes.

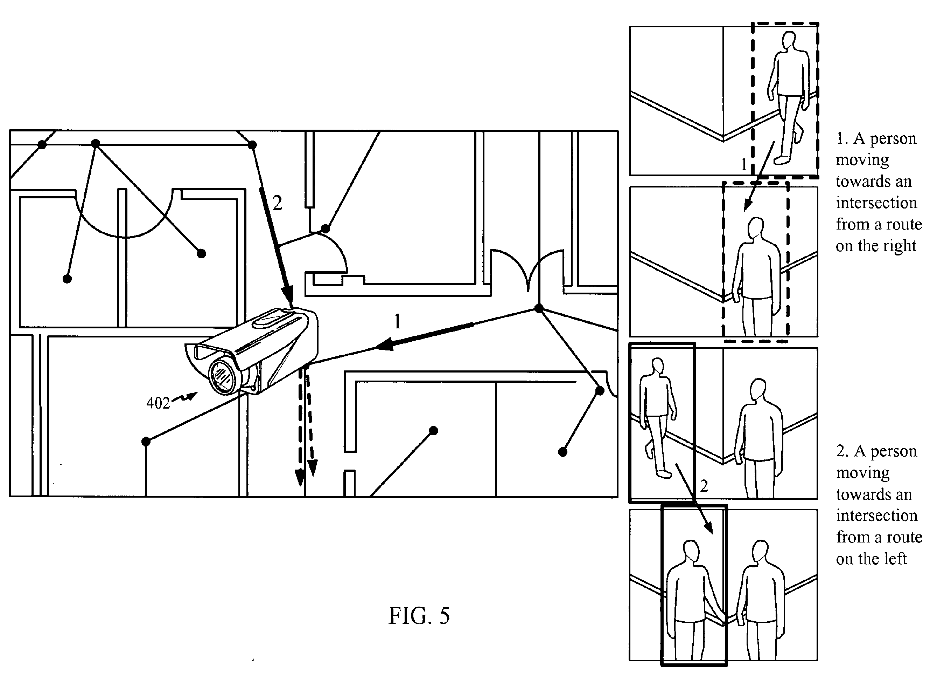

FIG. 5 shows how one illustrated camera, 402, may be used to determine existing pedestrian traffic and traffic estimation. As illustrated in example 1, a person moving toward the intersection recorded by the camera 402 may be approaching from the right hand side, indicated by the solid line marked with a "1". That person may either turn right, and head up in the illustrated indoor map, or the person may turn left, and head down in the illustrated indoor map. As illustrated in example 2, a person moving toward the intersection recorded by the camera 402 may be approaching from the left hand side, indicated by the solid line marked with a "2".

Based on a predictive determination, the system may determine that it is most likely that both individuals proceed down in the illustrated indoor map, meaning person 1 turns left and person 2 continues straight forward. The predictive determination may be based on the history of other pedestrians at the specific intersection, the time of day, the fact that two people arrive at the intersection at approximately the same time, or other factors.

Cameras may help predict congestion along a route as well as estimate a current distribution of people in a particular indoor location. Cameras on a route may provide users with present traffic/congestion information either in textual form or on a map. When calculating a best route, the route segments with traffic may be weighted to determine a best route for a user.

A count of individuals from a camera may be used to infer a traffic situation on a map. Route segments may be weighted based on a traffic condition (for example, heavy = 0.1, normal = 0.8, light = 1.0) when recommending a desired route to a user. Computing the traffic distribution at an intersection using cameras may provide information to motion models and position predictors.

The above operations may be performed by a device such as a server such as positioning server 110 or other server/back-end system. In that aspect, the determined information such as traffic estimation, route preference, etc. may be communicated to a mobile device. In one aspect, the above operations may be performed, or the above information determined, based on a request from a mobile device. In another aspect a mobile device may perform certain operations described above. The mobile device may perform such operations in communication with a positioning server 110 or other device. Route guidance information may be provided to a mobile device based on the traffic data or traffic estimation. Such route guidance information may include an estimated delay along a route, a preferred time to travel along a route, an alternate time to travel along a route, and/or an alternate route selection.

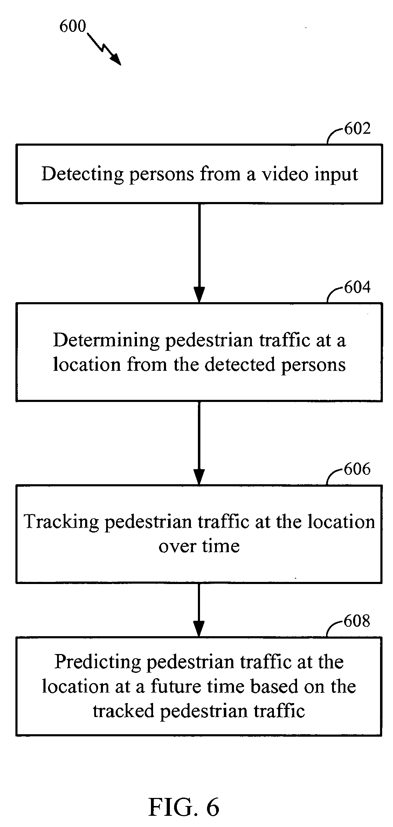

As shown in FIG. 6, a device may perform a method for determining pedestrian traffic. The method includes detecting persons from a video input, as shown in block 602. The method also includes determining pedestrian traffic at a location from the detected persons, as shown in block 604. The method also includes tracking pedestrian traffic at the location over time, as shown in block 606. The method also includes predicting pedestrian traffic at the location at a future time, based at least in part on the tracked pedestrian traffic, as shown in block 608.

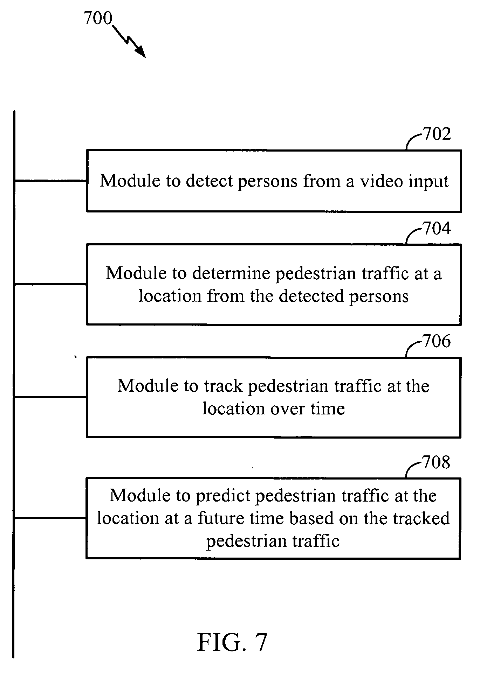

FIG. 7 shows a design of an apparatus 700 for a position location device. The apparatus 700 includes a module 702 to detect persons from a video input. The apparatus 702 also includes a module 704 to determine pedestrian traffic at a location from the detected persons. The apparatus 702 also includes a module 706 to track pedestrian traffic at the location over time. The apparatus 702 also includes a module 708 to predict pedestrian traffic at the location at a future time, based at least in part on the tracked pedestrian traffic. The modules in FIG. 7 may be processors, electronics devices, hardware devices, electronics components, logical circuits, memories, software codes, firmware codes, etc., or any combination thereof.

An apparatus may include means for detecting persons, determining pedestrian traffic, tracking pedestrian traffic, and predicting pedestrian traffic. The means may include indoor location information input devices 302, camera inputs 266, position computing service 268, pedestrian traffic module 222, person detection module 220, processor 210, memory 214, processor 280, memory 270, pedestrian traffic service 260, annotation database 264, map database 262, modules 702-708, positioning server 110, mobile device 108, and/or network 112. In another aspect, the aforementioned means may be a module or any apparatus configured to perform the functions recited by the aforementioned means.

It is understood that the specific order or hierarchy of steps in the processes disclosed is an example of exemplary approaches. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, microprocessors, one or more microprocessors in conjunction with a DSP core, or any other such configuration.

The steps of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, secure digital (SD) storage card, cloud/network storage, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

## Claims

1. A method for video based pedestrian traffic estimation comprising:
detecting persons from a video input obtained using a camera at a physical indoor location indicated in an annotation layer as a camera object, the camera object corresponds to a node connected by at least one route segment of a routability graph, the annotation layer and the routability graph corresponding to a map of an indoor location;
determining pedestrian traffic for the at least one route segment of the routability graph based on the detected persons;
tracking the determined pedestrian traffic based on trajectories of pedestrian motion at the node over time to develop a statistical model of the determined pedestrian traffic distribution in terms of the probability that a pedestrian would take a certain direction at the node;
predicting pedestrian traffic for the at least one route segment of the routability graph based on the statistical model; and
updating a traffic object in the annotation layer based on existing and predicted pedestrian traffic, wherein the traffic object comprises traffic-related information for said camera object.

2. The method of claim 1 in which detecting persons from a video input comprises detecting faces from the video input.

3. The method of claim 1 further comprising preparing route guidance information based at least in part on the determined pedestrian traffic.

4. The method of claim 1 in which the determining comprises determining one of an amount of pedestrian traffic at the location, a direction of pedestrian traffic at the location, and a flow of pedestrian traffic at the location.

5. The method of claim 1 further comprising estimating future pedestrian traffic at a location from the detected persons.

6. The method of claim 5 further comprising preparing route guidance information based at least in part on the estimated future pedestrian traffic.

7. The method of claim 6 in which the route guidance information comprises at least one of an estimated delay along a route, a preferred time to travel along a route, an alternate time to travel along a route, and an alternate route selection.

8. The method of claim 1 further comprising:
determining video source location information associated with the video input; and predicting pedestrian traffic based at least in part on the video source location information.

9. An apparatus for video based pedestrian traffic estimation comprising:
means for detecting persons from a video input obtained using a camera at a physical indoor location indicated in an annotation layer as a camera object, the camera object corresponds to a node connected by at least one route segment of a routability graph, the annotation layer and the routability graph corresponding to a map of an indoor location;
means for determining pedestrian traffic for the at least one route segment of the routability graph based on the detected persons;
means for tracking the determined pedestrian traffic based on trajectories of pedestrian motion at the node over time to develop a statistical model of the determined pedestrian traffic distribution in terms of the probability that a pedestrian would take a certain direction at the node;
means for predicting pedestrian traffic for the at least one route segment of the routability graph based on the statistical model; and
means for updating a traffic object in the annotation layer based on existing and predicted pedestrian traffic, wherein the traffic object comprises traffic-related information for said camera object.

10. The apparatus of claim 9 in which the means for detecting persons from a video input comprises means for detecting faces from the video input.

11. A computer program product for video based pedestrian traffic estimation comprising:
a non-transitory computer-readable medium having program code recorded thereon, the program code comprising:
program code to carry out the steps of any of claims 1 to 8.

## Patentansprüche

1. Ein Verfahren zur videobasierten Fußgängerverkehrsschätzung, das Folgendes aufweist:
Detektieren von Personen aus einer Videoeingabe, die unter Verwendung einer Kamera an einem physischen, im Innenbereich gelegenen Standort bzw. Innenraumstandort, erlangt wird, die in einer Anmerkungsebene als ein Kameraobjekt angezeigt wird, wobei das Kameraobjekt einem Knotenpunkt bzw. Knoten entspricht, der mit wenigstens einem Routensegment eines Routingfähigkeitsgraphs verbunden ist, wobei die Anmerkungsebene und der Routingfähigkeitsgraph einer Karte eines Innenraumstandortes entsprechen;
Bestimmen eines Fußgängerverkehrs für das wenigstens eine Routensegment des Routingfähigkeitsgraphs basierend auf den detektierten Personen;
Nachverfolgen des bestimmten Fußgängerverkehrs basierend auf Trajektorien einer Fußgängerbewegung an dem Knoten über die Zeit, um ein statistisches Modell der bestimmten Fußgängerverkehrsverteilung hinsichtlich der Wahrscheinlichkeit zu entwickeln, dass ein Fußgänger eine bestimmte Richtung an dem Knoten wählen würde;
Vorhersagen von Fußgängerverkehr für das wenigstens eine Routensegment des Routingfähigkeitsgraphen basierend auf dem statistischen Modell; und
Aktualisieren eines Verkehrsobjekts in der Anmerkungsebene basierend auf existierendem und vorhergesagtem Fußgängerverkehr, wobei das Verkehrsobjekt verkehrsbezogene Information für das Kameraobjekt aufweist.

2. Verfahren nach Anspruch 1, in dem das Detektieren von Personen aus einer Videoeingabe Detektieren von Gesichtern aus der Videoeingabe aufweist.

3. Verfahren nach Anspruch 1, das weiter Vorbereiten von Routenführungsinformation basierend zumindest teilweise auf dem bestimmten Fußgängerverkehr aufweist.

4. Verfahren nach Anspruch 1, in dem das Bestimmen Bestimmen einer Menge an Fußgängerverkehr an einem Standort oder einer Richtung von Fußgängerverkehr an dem Standort oder eines Flusses von Fußgängerverkehr an dem Standort aufweist.

5. Verfahren nach Anspruch 1, das weiter Schätzen von zukünftigem Fußgängerverkehr an einem Standort aus den detektierten Personen aufweist.

6. Verfahren nach Anspruch 5, das weiter Vorbereiten von Routenführungsinformation basierend zumindest teilweise auf dem geschätzten, zukünftigen Fußgängerverkehr aufweist.

7. Verfahren nach Anspruch 6, in dem die Routenführungsinformation wenigstens eines von Folgendem aufweist: eine geschätzte Verzögerung entlang einer Route, eine bevorzugte Zeit, um sich entlang einer Route zu bewegen, eine alternative Zeit, um sich entlang einer Route zu bewegen und eine alternative Routenauswahl.

8. Verfahren nach Anspruch 1, das weiter Folgendes aufweist:
Bestimmen von Videoquellenstandortinformation, die mit der Videoeingabe assoziiert ist; und
Vorhersagen von Fußgängerverkehr basierend zumindest teilweise auf der Videoquellenstandortinformation.

9. Eine Vorrichtung für videobasierte Fußgängerverkehrsschätzung, die Folgendes aufweist:
Mittel zum Detektieren von Personen aus einer Videoeingabe, die unter Verwendung einer Kamera an einem physischen, im Innenbereich gelegenen Standort bzw. Innenraumstandort, erlangt wird, die in einer Anmerkungsebene als ein Kameraobjekt angezeigt wird, wobei das Kameraobjekt einem Knoten entspricht, der mit wenigstens einem Routensegment eines Routingfähigkeitsgraphs verbunden ist, wobei die Anmerkungsebene und der Routingfähigkeitsgraph einer Karte eines Innenraumstandortes entsprechen;
Mittel zum Bestimmen eines Fußgängerverkehrs für das wenigstens eine Routensegment des Routingfähigkeitsgraphs basierend auf den detektierten Personen;
Mittel zum Nachverfolgen des bestimmten Fußgängerverkehrs basierend auf Trajektorien einer Fußgängerbewegung an dem Knoten über die Zeit, um ein statistisches Modell der bestimmten Fußgängerverkehrsverteilung hinsichtlich der Wahrscheinlichkeit zu entwickeln, dass ein Fußgänger eine bestimmte Richtung an dem Knoten wählen würde;
Mittel zum Vorhersagen von Fußgängerverkehr für das wenigstens eine Routensegment des Routingfähigkeitsgraphen basierend auf dem statistischen Modell; und
Mittel zum Aktualisieren eines Verkehrsobjekts in der Anmerkungsebene basierend auf existierendem und vorhergesagtem Fußgängerverkehr, wobei das Verkehrsobjekt verkehrsbezogene Information für das Kameraobjekt aufweist.

10. Vorrichtung nach Anspruch 9, in der die Mittel zum Detektieren von Personen aus einer Videoeingabe Mittel aufweisen zum Detektieren von Gesichtern aus der Videoeingabe.

11. Ein Computerprogrammprodukt zur videobasierten Fußgängerverkehrsschätzung, das Folgendes aufweist:
ein nicht transitorisches, computerlesbares Medium mit darauf gespeichertem Programmcode, wobei der Programmcode Folgendes aufweist:
Programmcode zum Ausführen der Schritte nach einem der Ansprüche 1 bis 8.

## Revendications

1. Procédé d'estimation de trafic piéton sur la base de vidéo comprenant :
détecter des personnes à partir d'une entrée vidéo obtenue en utilisant une caméra au niveau d'un emplacement physique intérieur indiqué dans une couche d'annotation comme étant un objet de caméra, l'objet de caméra correspondant à un noeud connecté par au moins un segment d'itinéraire d'un graphe de capacité d'acheminement, la couche d'annotation et le graphe de capacité d'acheminement correspondant à une carte d'un emplacement intérieur ;
déterminer le trafic piéton pour ledit au moins un segment d'itinéraire du graphe de capacité d'acheminement sur la base des personnes détectées ;
faire un suivi du trafic piéton déterminé sur la base de trajectoires dans le temps de mouvements de piétons au niveau du noeud pour développer un modèle statistique de la distribution du trafic piéton déterminé en ce qui concerne la probabilité qu'un piéton prenne une certaine direction au niveau du noeud ;
prédire le trafic piéton pour ledit au moins un segment d'itinéraire du graphe de capacité d'acheminement sur la base du modèle statistique ; et
mettre à jour un objet de trafic dans la couche d'annotation sur la base de trafic piéton existant et prédit, l'objet de trafic comprenant des informations associées au trafic pour l'objet de caméra.

2. Procédé selon la revendication 1, dans lequel la détection de personnes à partir d'une entrée vidéo comprend la détection de visages à partir de l'entrée vidéo.

3. Procédé selon la revendication 1, comprenant en outre la préparation d'informations de guidage d'itinéraire sur la base au moins en partie du trafic piéton déterminé.

4. Procédé selon la revendication 1, dans lequel la détermination comprend la détermination d'un élément parmi une quantité de trafic piéton au niveau de l'emplacement, une direction de trafic piéton au niveau de l'emplacement, et un flux de trafic piéton au niveau de l'emplacement.

5. Procédé selon la revendication 1, comprenant en outre une estimation de trafic piéton futur au niveau d'un emplacement à partir des personnes détectées.

6. Procédé selon la revendication 5, comprenant en outre la préparation d'informations de guidage d'itinéraire sur la base au moins en partie du trafic piéton futur estimé.

7. Procédé selon la revendication 6, dans lequel les informations de guidage d'itinéraire comprennent au moins un élément parmi un délai estimé suivant un itinéraire, un temps préféré pour se déplacer suivant un itinéraire, un temps alternatif pour se déplacer suivant un itinéraire, et une sélection d'itinéraire alternatif.

8. Procédé selon la revendication 1, comprenant en outre :
déterminer des informations d'emplacement de source vidéo associées à l'entrée vidéo ; et prédire un trafic piéton sur la base au moins en partie des informations d'emplacement de source vidéo.

9. Dispositif d'estimation de trafic piéton à base de vidéo comprenant :
des moyens pour détecter des personnes à partir d'une entrée vidéo obtenue en utilisant une caméra au niveau d'un emplacement physique intérieur indiqué dans une couche d'annotation comme étant un objet de caméra, l'objet de caméra correspondant à un noeud connecté par au moins un segment d'itinéraire d'un graphe de capacité d'acheminement, la couche d'annotation et le graphe de capacité d'acheminement correspondant à une carte d'un emplacement intérieur ;
des moyens pour déterminer le trafic piéton pour ledit au moins un segment d'itinéraire du graphe de capacité d'acheminement sur la base des personnes détectées ;
des moyens pour faire un suivi du trafic piéton déterminé sur la base de trajectoires dans le temps de mouvements de piétons au niveau du noeud pour développer un modèle statistique de la distribution du trafic piéton déterminé en ce qui concerne la probabilité qu'un piéton prenne une certaine direction au niveau du noeud ;
des moyens pour prédire le trafic piéton pour ledit au moins un segment d'itinéraire du graphe de capacité d'acheminement sur la base du modèle statistique ; et
des moyens pour mettre à jour un objet de trafic dans la couche d'annotation sur la base de trafic piéton existant et prédit, l'objet de trafic comprenant des informations associées au trafic pour l'objet de caméra.

10. Dispositif selon la revendication 9, dans lequel les moyens pour détecter des personnes à partir d'une entrée vidéo comprennent des moyens pour détecter des visages à partir de l'entrée vidéo.

11. Produit programme d'ordinateur pour une estimation de trafic piéton à base de vidéo comprenant :
un support non transitoire lisible par un ordinateur comportant du code de programme enregistré sur lui, le code de programme comprenant :
du code de programme pour réaliser les étapes de l'une quelconque des revendications 1 à 8.
